# EUROPEAN PATENT APPLICATION

(11) **EP 1 197 318 A2**
(43) Date of publication of application: **17.04.2002**
(21) Application number: 01109895.1
(22) Date of filing: 24.04.2001
(51) Int. Cl.: B29D 31/50, B29D 31/508

(54) **Machine and moulds for the production of footwear and other technical or non-technical articles in more than one plastic material and/or colour, with interchangeable mould parts with closed mould-holder**

(30) Priority: 13.10.2000 IT PD000239
(71) Applicant: Ottogalli Businaro srl, 35020 Albignasego(PD) (IT)
(72) Inventor: Roveroni, Luigi, 35020 Albignasego (PD) (IT); Novo, Roberto, 35020 Albignasego (PD) (IT); Bontà, Damiano, 35020 Albignasego (PD) (IT); Bontà, Nicola, 35020 Albignasego (PD) (IT)
(74) Representative: Gustorf, Gerhard, Dipl.-Ing.

(57) **Abstract**

The invention is a new machine for the production of footwear in more than one plastic material and/or colour, in which the mould-holders are not completely closed, but are provided with large openings whose dimensions permit the insertion and locking of a half-mould, that is, each mould-holder is constituted by the parts that are necessary and sufficient to hold, lift and close the half-moulds. The moulds are constituted by a main part and several secondary parts: the inside of each main has the shape of the upper, except for the parts in more than one material and/or colour, and is provided with compartments or holes in correspondence with said parts of the upper in more than one material or colour; the secondary parts are shaped so that they can be inserted in the compartments or holes provided on the main part of the mould and each of them has the shape of the parts in more than one material or colour to be moulded in the various injection phases. The new machine and the relevant moulds make it possible to produce footwear in different colours and/or plastic materials easily, rapidly and with great precision, with no need to open the moulds, to remove or move the shoes that have been injected only partially, to change the moulds completely, and with no risk that the parts injected successively may be misaligned or imperfect.

## Description

The present invention concerns the sector of machines for the injection moulding of plastic materials. In this case, the invention described is a machine for the moulding of PVC (polyvinyl chloride) footware.

The machines used at present for the injection moulding of footware in plastic material comprise a series of moulds installed on a structure that positions the moulds in correspondence with the various working stations.

Each mould is constituted by two half-moulds - upper and lower - for the moulding of the two sides of the upper, and by one or two moulds, positioned frontally with respect to the other two, for the moulding of the sole in different colours and/or materials.

When the production of footwear with the upper in two different materials or two different colours is required, it is necessary to mould the first part, open the mould-holder, change the moulds, close the mould-holder and proceed to the injection of the second part of the upper.

These operations take a lot of time and labour, since they must be carried out with the machine at rest and they may also cause a misalignment between the part of the upper that is moulded first and the part moulded successively, with results that cannot be considered optimal.

In order to overcome all the drawbacks mentioned above, a new machine with relevant mould-holders and moulds has been designed and implemented for the production of uppers, technical and non-technical articles in more than one plastic material and/or colour, wherein the mould parts are interchangeable with closed mould-holder.

The new machine susbstantially comprises a rotary or translating circular structure of known type, on which mould-holder units are installed, each one of said mould-holder units being provided with lower mould-holder, upper mould-holder and front mould-holder.

The front mould-holder is substantially similar to the known types of mould-holders, while the upper and lower mould-holders feature some innovations.

The upper and lower mould-holders are not completely closed, but are provided with large openings whose dimensions permit access to the half-mould. In other words, each mould-holder is constituted by the parts that are necessary and sufficient to hold, lift and close the half-moulds (and/or the inserts).

Each half-mould, in turn, is constituted by a main part and other secondary parts (inserts).

The main part of the half-mould is provided with coupling and attaching means that allow it to be fastened to the mould-holder, its inside has the shape of the upper, except for the parts in more than one material or colour, and it is provided with compartments or holes in correspondence with said parts of the upper in more than one material or colour.

The secondary parts of the half-mould are shaped so that they can be inserted in the compartments or holes provided on the main part of the half-mould and their shape is that of the parts in more than one material or colour to be moulded in the various injection phases.

The half-mould, therefore, has at least two secondary parts: a first secondary part when inserted in the mould occupies the volume destined for all the successive parts in different materials or colours (empty for the first colour) and consequently the first injection of plastic material produces the entire first part of the shoe in the first material/colour; the other secondary part when inserted in the mould leaves a free space equivalent to the volume destined for a second injection corresponding to a second material of different type or colour.

More successive layers or parts in different colours and/or materials require the use of further secondary parts (external) of the half-moulds and further injections.

On each injection the material fills the empty space corresponding to the difference between a secondary part of the half-mould and the successive secondary part.

In order to ensure the easy and quick change of the various secondary parts of the half-moulds, the mould-holders are equipped with supports and mechanisms suitable for removing and inserting the various secondary parts of the half-mould in the compartments or holes provided on the main part of the half-mould. Said supports and mechanisms are controlled by the same process that manages the mould-holders and the injection equipment, so that the whole process required for the production of footwear and technical and non-technical articles in more than one colour and/or material becomes completely automatic.

The new machine and the relevant moulds as described above make it possible to produce footwear and other products in different colours and/or plastic materials easily, rapidly and with great precision, with no need to open the moulds, to remove or move the shoes that have been injected only partially, to change the moulds completely, and with no risk that the parts injected successively may be misaligned or imperfect.

The new machine and the relevant moulds, besides being used for different colours and/or materials, can also be used to produce footwear in different sizes with a single injection phase, in addition to various technical articles in different shapes.

The following is just an example among many of a practical embodiment of the invention in question, illustrated in the enclosed drawings. The moulds constructed as described above can be applied to mould-holders with book and/or vertical opening.

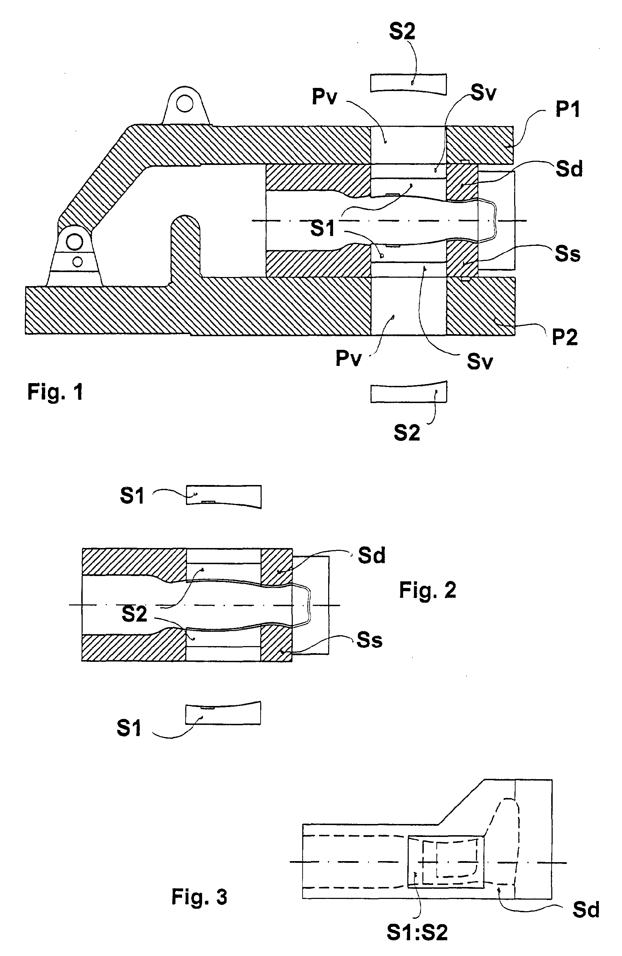

Figure 1 is a side view of the mould-holders (P1, P2) of the new machine for the production of PVC footwear, on which the two half-moulds (Sd, Ss) of a shoe are installed, and which is suitable for the production of footwear in two colours or materials.

It is possible to observe that each one of the two mould-holders (P1, P2) and each one of the two half-moulds (Sd, Ss) is provided with openings and compartments (Pv, Sv) for the passage of the secondary parts (S1, S2) of the half-moulds (Ss, Sd).

In this figure the first secondary parts (S1) are inserted in the half-moulds (Sd, Ss) and the second secondary parts (S2) wait outside the mould-holders (P1, P2): the first injection of the innermost material takes place in this phase.

For greater convenience, Figure 2 shows only the half-moulds (Sd, Ss) with the first secondary parts (S1) extracted from the half-moulds (Ss, Sd) and with the second secondary parts (S2) inserted in the half-moulds themselves (Sd, Ss): the successive injection of the second, more external material takes place in this phase.

Figure 3 is a top view of a half-mould (Sd) with a secondary part (S1, S2) inserted; the dotted line indicates the outline of the shoe and of the parts in different colours/materials.

Therefore, with reference to the above specifications and to the enclosed drawings, the following claims are put forth.

## Claims

1. Machine for the production of footwear and technical and non-technical articles in more than one plastic material and/or colour, **characterized in that** the mould-holders are not completely closed, but are provided with large openings whose dimensions permit the insertion and locking of a half-mould, that is, each mould-holder is constituted by the parts that are necessary and sufficient to hold, lift and close the half-moulds.

2. Moulds for the production of footwear and technical and non-technical articles in more than one plastic material and/or colour, **characterized in that** they comprise a main part and several secondary parts, and wherein the inside of each main part has the shape of the upper or of a part of a different article of any type, except for the parts in more than one material and/or colour, and is provided with compartments or holes in correspondence with said parts of the upper in more than one material or colour, and wherein the secondary parts are shaped so that they can be inserted in the compartments or holes provided on the main part of the mould and their shape is that of the parts in more than one material or colour to be moulded in the various injection phases.

3. Machine for the production of footwear and technical and non-technical articles in more than one plastic material and/or colour according to claim 1, suitable for housing moulds divided in more parts according to claim 2, **characterized in that** it is provided with supports and mechanisms suitable for removing and inserting the several secondary parts in the compartments or holes provided on the main part of the moulds themselves.
